# FASCICULE DE BREVET EUROPEEN

(11) **EP 1 031 386 B1**
(45) Date de publication et mention de la délivrance du brevet: **28.05.2003**
(21) Numéro de dépôt: 00400491.7
(22) Date de dépôt: 23.02.2000
(51) Int. Cl.: B07C 3/06, B65H 29/52

(54) **Goulotte d'évacuation d'objets dans une installation de tri**
Ausgangsrutsche in eine Sortiereinrichtung
Chute for evacuating articles in a sorting installation

(30) Priorité: 25.02.1999 FR 9902360
(43) Date de publication de la demande: 30.08.2000
(73) Titulaire: Automatisme Nouveau Organisation, 85340 Olonne sur Mer (FR)
(72) Inventeur: Cailbault, Christian, 85100 Le Chauteau d'Olonne (FR)
(74) Mandataire: Nithardt, Roland

(56) Documents cités:
- EP-A- 0 631 827
- GB-A- 1 593 636
- US-A- 5 197 728

## Description

L'invention se rapporte à un dispositif formant goulotte d'évacuation d'objets distribués par un convoyeur de triage ; elle concerne plus particulièrement un perfectionnement à une telle goulotte permettant d'amortir la chute des objets et d'éviter ainsi leur détérioration tout en assurant un meilleur guidage de leur trajectoire, l'objet étant éjecté à plat, ce qui permet, si on le souhaite, d'empiler les objets automatiquement dans un réceptacle placé dans le prolongement de la sortie.

L'invention concerne également un module de goulottes d'évacuation d'objets comportant au moins deux dispositifs formant goulottes définis ci-dessus avec des sorties à des niveaux différents. Elle vise enfin toute installation de tri d'objets équipée de telles goulottes ou modules.

On connaît une installation de tri d'objets permettant de regrouper des pochettes ou petits paquets dans différents réceptacles, en fonction de leurs destinations. Par exemple, une telle installation est couramment utilisée dans les centres de développement de photographies, pour le traitement des pochettes renfermant les photographies développées et leurs négatifs, qu'il s'agit de réexpédier vers les clients ou officines. On procède à l'aide d'un convoyeur à pinces qui organise la circulation des pochettes le long d'un parcours en boucle prédéterminé. Les pinces circulent au-dessus d'une pluralité de goulottes d'évacuation. L'ouverture d'une pince à un moment donné de son parcours conditionne la chute de l'objet dans une goulotte sélectionnée et l'acheminement de cet objet vers un réceptacle correspondant.

Un tel système est par exemple décrit dans le brevet européen N° 0 437 501, appartenant à la Demanderesse.

Souvent, les réceptacles sont de simples sacs où les objets s'accumulent en vrac.

Certains utilisateurs préfèrent employer des bacs de réception et dans ce cas, lorsque les objets ont tous sensiblement la même forme et les mêmes dimensions, il est avantageux de faire en sorte qu'il soient orientés pendant leur évacuation dans les goulottes pour pouvoir s'empiler de façon ordonnée dans ces bacs de réception.

Le brevet européen N° 0 631 827, décrit un agencement de goulottes qui permet en principe aux objets de s'empiler à plat et d'une façon ordonnée dans des bacs de réception placés aux sorties des goulottes. Une goulotte décrite dans ce document comporte une partie verticale où l'objet tombe librement et une sorte de chicane constituée de plans inclinés les uns vers les autres pour former une sorte de coude. Ladite chicane renvoie l'objet à la fin de sa chute vers la sortie. La forme d'une telle goulotte permet en principe un empilage ordonné dans un réceptacle de forme prédéterminée adaptée. Cependant, on a pu vérifier un certain pourcentage d'échecs dans l'empilage. Autrement dit, de temps en temps, un objet ne se place pas correctement dans la pile en formation. De plus, la chute libre dans la goulotte peut endommager un objet fragile au moment de l'impact sur ladite chicane.

L'invention propose un nouveau type de goulotte qui s'est révélé plus efficace pour le tri de tels objets, tant du point de vue de l'absorption des chocs pendant le trajet dans la goulotte que de celui de la fiabilité de l'empilage ordonné.

Plus particulièrement, l'invention concerne un dispositif formant goulotte d'évacuation d'objets distribués par un convoyeur de triage, comprenant une entrée définie par une ouverture s'étendant sensiblement horizontalement et un conduit de guidage reliant ladite entrée à une sortie située à un niveau inférieur à celui de ladite entrée, caractérisé en ce qu'au moins un déflecteur élastique est agencé dans ledit conduit de façon qu'une partie mobile de celui-ci soit en regard d'une paroi transversale dite de guidage dudit conduit, afin de repousser momentanément un objet engagé dans celui-ci vers ladite paroi transversale de guidage.

Par paroi transversale, on entend l'une des deux parois de la goulotte qui s'étend globalement transversalement par rapport au sens de progression des objets convoyés par les pinces. Une telle goulotte comporte donc essentiellement deux telles parois transversales espacées l'une de l'autre et une paroi de fond réunissant ces deux parois transversales.

De façon avantageuse, un tel déflecteur consiste en une lame souple élastique fixée par une extrémité audit conduit et faisant saillie à l'intérieur de celui-ci vers le bas, en direction de ladite paroi transversale de guidage en sorte que ladite lame élastique constitue un obstacle souple dans ledit conduit, susceptible de s'effacer élastiquement au passage d'un objet tout en le repoussant vers ladite paroi transversale de guidage.

Cet agencement permet d'une part de freiner l'objet dans sa progression tout en l'obligeant à suivre ladite paroi transversale de guidage.

Selon un mode de réalisation possible, un tel conduit de guidage comporte une paroi de fond globalement incurvée suivant le sens de l'évacuation de l'objet. Ce mode de réalisation est particulièrement indiqué lorsque la sortie est très éloignée de l'entrée.

Selon un autre mode de réalisation, un conduit de guidage selon l'invention, comporte une paroi de fond globalement rectiligne suivant le sens d'évacuation de l'objet. Cette paroi de fond peut comporter un tronçon amont se raccordant à la paroi transversale de guidage par une portion à surface courbe et un tronçon aval en plan incliné s'étendant jusqu'à la sortie. Ce mode de réalisation est plus particulièrement indiqué lorsque la distance séparant l'entrée de la sortie n'est pas trop importante.

Dans les deux cas, la largeur du conduit peut avantageusement s'élargir d'amont en aval. Par conséquent, en combinant les deux modes de réalisation précédemment mentionnés, on peut définir un module comportant au moins deux goulottes ayant des sorties de même largeur à des niveaux différents. Dans un tel module, les deux goulottes sont agencées côte-à-côte avec leurs entrées respectives situées dans le même plan à la partie supérieure du module et leurs sorties respectives situées à des niveaux différents, l'une au-dessus de l'autre.

Bien entendu, l'invention concerne aussi un tel module ainsi que toute installation de tri d'objets comportant une pluralité de dispositifs formant goulottes d'évacuation présentant les caractéristiques définies ci-dessus ou une pluralité de modules de goulottes définissant au moins deux niveaux de sortie.

L'invention sera mieux comprise et d'autres avantages de celle-ci apparaîtront plus clairement à la lumière de la description qui va suivre d'un module de goulottes d'évacuation d'objets comprenant deux telles goulottes d'évacuation combinées, donnée uniquement à titre d'exemple et faite en référence aux dessins annexés dans lesquels :
- la figure 1 est une vue générale en perspective du module en question ;

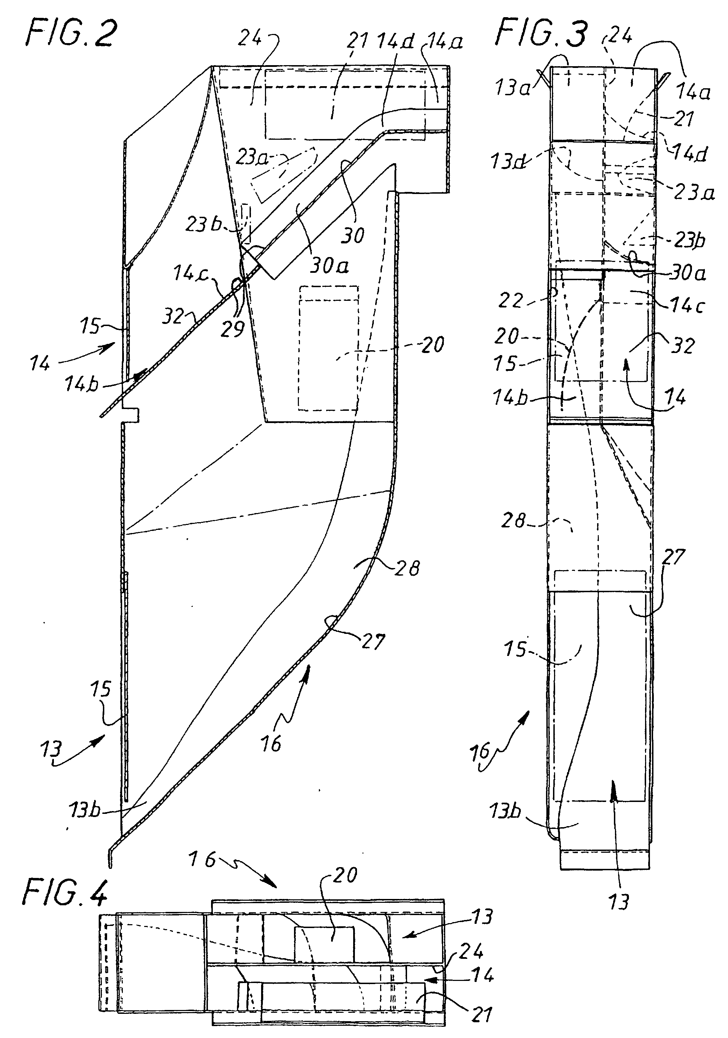

- la figure 2 est une vue schématique suivant une coupe II-II de la figure 1 ;
- la figure 3 est une vue frontale en élévation du module, selon la flèche III de la figure 1 ; et
- la figure 4 est une vue de dessus du même module.

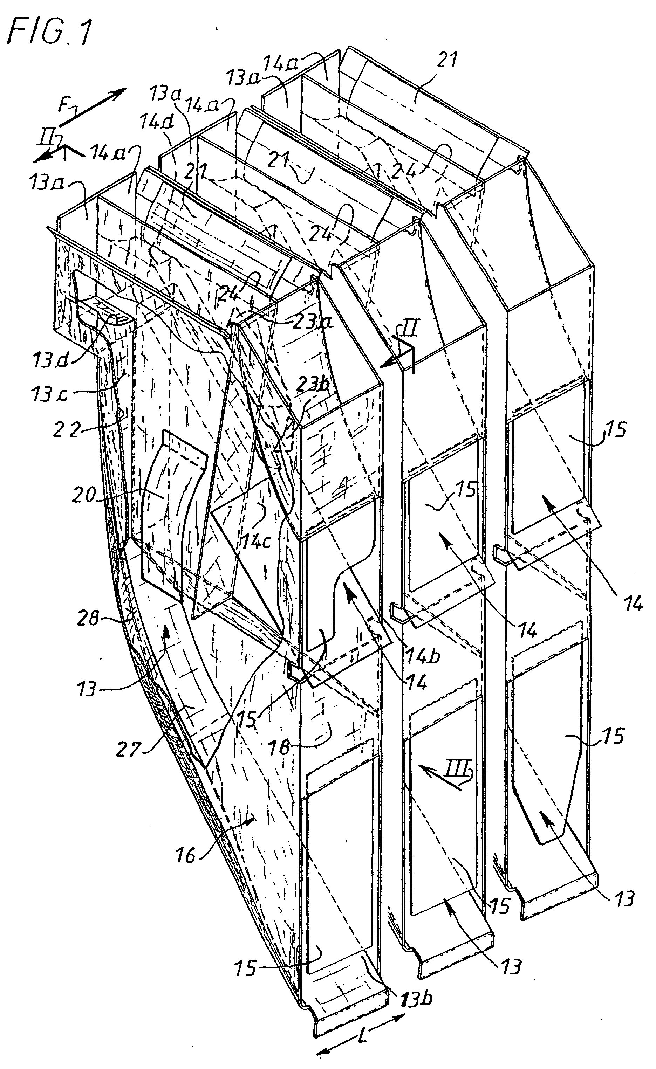

Sur les dessins, on a représenté un module 11 de goulottes d'évacuation d'objets constitué de l'association de deux goulottes 13, 14 définies dans un même boîtier 16 relativement plat par rapport au sens de circulation des objets imposé par un convoyeur (non représenté) transportant les objets au-dessus d'une rangée de tels modules. Le sens de circulation est indiqué par la flèche F sur la figure 1. Sur cette dernière, on a représenté quelques modules voisins. Un ensemble de tels modules définit donc une pluralité d'emplacements où des objets peuvent être lâchés sélectivement par commande des pinces correspondantes du convoyeur, de sorte que le lâchage d'un objet provoque sa chute dans une goulotte 13 ou 14 sélectionnée, pour effectuer un tri, par exemple pour regrouper les objets en fonction de leurs destinations.

Dans chaque module les goulottes sont agencées côte-à-côte. Chaque dispositif formant goulotte 13, 14 comporte une entrée 13a, 14a définie par une ouverture s'étendant sensiblement horizontalement et une sortie 13b, 14b correspondante, située à un niveau inférieur à celui de l'entrée. Un conduit de guidage 13c, 14c est agencé entre chaque entrée et la sortie correspondante. Chaque sortie est ménagée sur la façade 18 du module, c'est-à-dire la face verticale accessible de celui-ci contre laquelle on vient disposer des casiers de réception dans lesquels les objets peuvent s'accumuler d'une façon ordonnée en s'empilant à plat les uns sur les autres. Il est à noter que dans le module représenté, les deux sorties 13b, 14b se définissent par deux ouvertures rectangulaires occupant sensiblement toute la longueur L de la façade 18, mais situées à des niveaux différents. Des panneaux flexibles 15, par exemple en matériau élastomère sont rattachés aux bords supérieurs des ouvertures. Ils pendent librement devant les sorties pour freiner les objets. Certains panneaux flexibles peuvent être découpés, comme représenté ; la forme du contour découpé est déterminée en fonction de la forme et des dimensions des objets sélectionnés.

Les deux goulottes agencées dans le module n'ont pas la même longueur. Par commodité, on parlera dans la suite du texte de la goulotte longue 13 reliant l'entrée 13a à la sortie 13b la plus basse et de la goulotte courte 14 reliant l'entrée 14a, à la sortie 14b la plus haute. Il est à noter cependant que le principe de l'invention est applicable à un module plus complexe regroupant plus de deux goulottes avec des sorties à des niveaux différents sur la façade, les entrées étant toutes disposées côte-à-côte et horizontalement à la partie supérieure d'un tel module. Inversement, on peut concevoir un dispositif formant goulotte d'évacuation unique (un seul niveau de sortie). Dans tous les cas, on pourrait disposer une pluralité de tels dispositifs côte-à-côte pour définir un ensemble de réception semblable à celui de la figure 1, mais à une seule rangée de sorties.

Dans le module 11, chaque conduit de guidage 13c, 14c agencé comme mentionné ci-dessus entre une entrée horizontale supérieure et une sortie inférieure, comporte au moins un déflecteur 20, 21 souple et élastique installé de façon qu'une partie mobile de celui-ci soit en regard d'une paroi transversale dudit conduit. Cette paroi transversale particulière est appelée "paroi de guidage". Ainsi, chaque goulotte comporte deux parois transversales approximativement verticales, le déflecteur souple est fixé à une paroi transversale et il coopère avec l'autre paroi transversale dite "de guidage".

Dans l'exemple, la paroi transversale de guidage 22 de la goulotte longue 13 constitue la paroi arrière du module 11 si on considère le sens de progression des objets au-dessus de celui-ci, tandis que ladite paroi de guidage 24 de la goulotte courte est constituée par la paroi qui sépare les deux goulottes dans le module. Comme on le verra plus loin, cette paroi de séparation est coudée à angle droit à l'intérieur du module et rejoint la paroi arrière du module ce qui définit un élargissement du conduit de guidage court 14c dans sa partie aval, jusqu'à la sortie 14b, laquelle occupe sensiblement toute la longueur du module. De même, il est visible que le conduit de guidage long 13c comporte une partie amont étroite s'étendant sur sensiblement la moitié de la longueur L du module, qui rejoint une partie aval élargie, en-dessous de la sortie 14b du conduit de guidage court. Cette partie aval s'étend jusqu'à la sortie inférieure 13b occupant sensiblement toute la longueur du module.

Un tel déflecteur 20 ou 21 consiste en une lame élastique, souple et flexible, fixée par une extrémité audit conduit correspondant et faisant saillie à l'intérieur de celui-ci, vers le bas, en direction de la paroi transversale de guidage 22 ou 24 correspondante.

Plus précisément, le conduit de guidage 13c est doté d'un déflecteur 20 en forme de lame élastique, fixé à la paroi transversale qui sépare les deux conduits et faisant saillie dans le conduit 13c, en étant incliné vers le bas en direction de ladite paroi de guidage 22 du conduit 13c. De façon semblable, le conduit de guidage 14c est doté d'au moins un déflecteur 21 en forme de lame élastique, fixé à la paroi transversale avant du module et faisant saillie dans le conduit 14c en étant incliné vers le bas en direction de la paroi de guidage 24 de ce conduit 14c, qui constitue également la séparation entre les deux conduits de guidage. Le déflecteur 20 est disposé dans le conduit 13c, un peu au-dessus de la moitié inférieure de celui-ci, tandis que le déflecteur 21 s'étend de préférence au voisinage immédiat de l'ouverture définissant l'entrée 14a du conduit 14c. Ce dernier est en outre équipé de deux autres déflecteurs 23a, 23b, situés à des niveaux inférieurs dans le conduit. Le déflecteur 23a est monté comme le déflecteur 21 mais se situe plus en aval dans la goulotte et son bord de fixation à la paroi transversale avant du module est incliné dans le sens du trajet descendant des objets, au contraire des bords de fixation des déflecteurs 20 et 21 qui sont horizontaux. Le déflecteur 23b se situe à un niveau encore plus bas que le déflecteur 23a. Son bord de fixation est vertical et sa partie en saillie est triangulaire ; sa pointe libre est dirigée vers la paroi de guidage 24 de la goulotte courte. Les déflecteurs 23a et 23b ne sont pas indispensables ; ils peuvent ou non être installés dans la goulotte courte en fonction de la nature (poids, dimensions) des objets à traiter.

Chaque lame élastique 20, 21, 23a ou 23b constitue un obstacle souple dans le conduit correspondant, susceptible de s'effacer élastiquement au passage d'un objet tout en le repoussant vers la paroi transversale de guidage 22, 24 correspondante.

Chaque conduit de guidage comporte, en partie haute, un socle de basculement 13d, 14d défini au voisinage de l'entrée 13a, 14a correspondante. Ce socle est défini à un niveau inférieur à celui de l'entrée et s'étend en regard d'une partie seulement de la surface de celle-ci. Le socle 13d est incurvé vers le haut, du côté de la paroi transversale de guidage 22 du conduit 13c. De même, le socle 14d est incurvé vers le haut du côté de la paroi transversale de guidage 24 du conduit 14c. L'arrondi permet d'incliner un objet ou pochette de façon que son bord supérieur soit déjà en contact avec la paroi arrière, c'est-à-dire la paroi de guidage avant même son basculement, ce qui est favorable pour la suite de son parcours.

L'objet bascule sensiblement de 90° dans la goulotte longue 13 et d'environ 45° dans la goulotte courte 14.

Le conduit de guidage 13c de la goulotte longue comporte une paroi de fond 27 s'étendant entre le socle 13d et la sortie 13b qui est globalement incurvée suivant le sens de l'évacuation d'un objet. La portion inférieure en pente de cette paroi de fond, c'est-à-dire la plus proche de la sortie 13b est sensiblement plate. Cependant, cette paroi de fond se raccorde à ladite paroi transversale de guidage 22 par une portion à surface courbe 28.

Par conséquent, la forme globale du conduit de guidage 13c rappelle un peu celle d'une chistera, au moins pour la forme de ladite paroi de guidage. Cette forme contribue à maintenir le contact entre l'objet et le conduit de guidage.

Le conduit de guidage 14c de la goulotte courte 14 comporte, quant à lui, une paroi de fond 29 qui est globalement rectiligne suivant le sens d'évacuation de l'objet. Elle est inclinée, environ à 45° à partir du socle 14d. Cependant, cette paroi de fond comporte un tronçon amont 30 qui se raccorde à la paroi transversale de guidage 24 de la goulotte courte par une portion à surface courbe ascendante tandis que le tronçon aval 32 est en plan incliné et s'étend jusqu'à la sortie 14b. Comme mentionné précédemment, le conduit s'élargit par un pliage à angle droit de la paroi 24 qui rejoint la paroi 22 de sorte que la partie terminale la plus basse de la paroi de fond 29 occupe sensiblement toute la longueur L du module. Comme on peut le voir sur les dessins, dans la goulotte longue, cet élargissement d'amont en aval est progressif ; il résulte de la forme de la portion à surface courbe 28.

Le fonctionnement est des plus simples et découle avec évidence de la description qui précède.

Lorsqu'un objet est lâché au-dessus de l'entrée 13a de la goulotte longue 13, il rencontre presque immédiatement le socle 13d et pivote de 90° avant de plonger dans le conduit. Dès son arrivée sur le socle, l'objet est donc en contact avec la partie supérieure de la paroi de guidage, par son bord supérieur en raison de la présence de l'arrondi 13d. Il reste en contact avec cette paroi après son basculement sans jamais tomber en chute libre non guidée. Il rencontre sur son passage le déflecteur 20 qui le freine dans sa progression et en même temps confirme le contact avec la paroi transversale de guidage 22, concave comme cela est visible sur les dessins. Par conséquent, l'objet est assujetti à suivre cette surface légèrement concave (son bord supérieur étant en contact avec elle) et à venir progressivement glisser sur la partie terminale plate en pente du conduit, jusqu'à la sortie 13b. Le volet souple 15 freine l'éjection de l'objet qui vient se placer à plat et s'empiler dans un réceptacle situé dans le prolongement de la sortie 13b.

Si un objet est lâché au-dessus de l'entrée 14a de la goulotte courte 14, il rencontre également le socle 14d qui amorce son pivotement en direction de la sortie en même temps que le déflecteur 21 le repousse vers la paroi transversale de guidage 24 de ladite goulotte courte. L'objet poursuit sa progression dans la partie étroite du conduit en étant de biais dans celui-ci et en appui par son bord supérieur contre cette paroi transversale de guidage 24 ; il se couche sur le plan incliné élargi lorsqu'il pénètre dans la partie élargie du conduit de guidage 14c. Il est ensuite évacué par la sortie 14b, et vient s'empiler à plat dans un réceptacle placé dans le prolongement de celle-ci. Comme dans le cas précédent, l'objet est maintenu en contact avec le conduit de guidage pendant tout son trajet et ne tombe pas en chute libre. Il est freiné par le ou les déflecteurs. Le fonctionnement qui vient d'être indiqué concerne le traitement d'objets plats susceptibles de s'empiler, ayant de préférence un contour approximativement rectangulaire comme par exemple des étuis, pochettes ou petits boîtiers. Cependant, les goulottes décrites, permettent un traitement d'objets de formes différentes et variées, même relativement fragiles.

## Revendications

1. Dispositif formant goulotte d'évacuation d'objets distribués par un convoyeur de triage, comprenant une entrée définie par une ouverture s'étendant sensiblement horizontalement et un conduit de guidage reliant ladite entrée à une sortie située à un niveau inférieur à celui de ladite entrée, **caractérisé en ce qu'**au moins un déflecteur élastique (20, 21) est agencé dans ledit conduit (13c, 14c) de façon qu'une partie mobile de celui-ci soit en regard d'une paroi transversale (22, 24) dite de guidage dudit conduit, afin de repousser momentanément un objet engagé dans celui-ci vers ladite paroi transversale de guidage.

2. Dispositif selon la revendication 1, **caractérisé en ce qu'**un tel déflecteur (20, 21) consiste en une lame souple élastique fixée par une extrémité audit conduit (13c, 14c) et faisant saillie à l'intérieur de celui-ci vers le bas, en direction de ladite paroi transversale de guidage en sorte que ladite lame élastique constitue un obstacle souple dans ledit conduit, susceptible de s'effacer élastiquement au passage d'un objet tout en le repoussant vers ladite paroi transversale de guidage.

3. Dispositif selon la revendication 1 ou 2, **caractérisé en ce que** ledit conduit de guidage comporte un socle de basculement (13d, 14d) au voisinage de l'entrée, à un niveau inférieur à celui de ladite entrée s'étendant en regard d'une partie de la surface de celle-ci.

4. Dispositif selon la revendication 3, **caractérisé en ce que** ledit socle (13d, 14d) est incurvé vers le haut du côté de ladite paroi transversale de guidage (22, 24).

5. Dispositif selon l'une des revendications précédentes, **caractérisé en ce qu'**un tel conduit de guidage comporte une paroi de fond (27) globalement incurvée suivant le sens de l'évacuation dudit objet.

6. Dispositif selon la revendication 5, **caractérisé en ce qu'**une portion inférieure de cette paroi de fond, s'étendant jusqu'à ladite sortie, est sensiblement en forme de plan incliné.

7. Dispositif selon la revendication 5 ou 6, **caractérisé en ce que** ladite paroi de fond se raccorde à ladite paroi transversale de guidage par une portion à surface courbe (28).

8. Dispositif selon l'une des revendications 1 à 4, **caractérisé en ce qu'**un tel conduit de guidage comporte une paroi de fond (29) globalement rectiligne suivant le sens d'évacuation dudit objet.

9. Dispositif selon la revendication 8, **caractérisé en ce que** cette paroi de fond comporte un tronçon amont (30) se raccordant à ladite paroi transversale de guidage par une portion à surface courbe et un tronçon aval (32) en plan incliné, s'étendant jusqu'à ladite sortie.

10. Dispositif selon l'une des revendications précédentes, **caractérisé en ce que** la largeur dudit conduit s'élargit d'amont en aval.

11. Dispositif selon l'une des revendications précédentes, **caractérisé en ce qu'**il comporte plusieurs déflecteurs (21, 23a, 23b) précités agencés à des niveaux différents dans ledit conduit, le long du trajet d'un objet, pour repousser chaque fois ledit objet vers ladite paroi transversale de guidage.

12. Module de goulottes d'évacuation d'objets, **caractérisé en ce qu'**il comporte au moins deux dispositifs formant goulottes (13, 14) selon l'une des revendications précédentes, agencés côte-à-côte avec leurs entrées respectives (13a, 14a) situées côte-à-côte à la partie supérieure dudit module et leurs sorties respectives situées à des niveaux différents, l'une au-dessus de l'autre.

13. Module selon la revendication 12, **caractérisé en ce que** le conduit de guidage qui est défini entre une entrée et la sortie la plus basse est du type comportant une paroi de fond (27) globalement incurvée suivant le sens de l'évacuation d'un tel objet.

14. Module selon l'une des revendications 12 ou 13, **caractérisé en ce que** le conduit de guidage qui est défini entre une entrée et la sortie la plus haute est du type comportant une paroi de fond (29) inclinée, globalement rectiligne suivant le sens de l'évacuation d'un tel objet.

15. Installation de tri d'objets, **caractérisée en ce qu'**elle comporte une pluralité de dispositifs formant goulottes d'évacuation selon l'une des revendications 1 à 11, agencés côte-à-côte.

16. Installation de tri d'objets, **caractérisée en ce qu'**elle comporte une pluralité de modules de goulottes d'évacuation selon l'une des revendications 12 à 14, agencés côte-à-côte.

## Patentansprüche

1. Vorrichtung in Form einer Rutsche zum Austragen von durch einen Sortierförderer verteilten Gegenständen, der einen von einer sich praktisch horizontal erstreckenden Öffnung festgelegten Eingang und einen Führungskanal aufweist, welcher den Eingang mit einem Ausgang verbindet, der auf einer Höhe liegt, die niedriger als die des Eingangs ist, **dadurch gekennzeichnet, dass** mindestens ein elastisches Ablenkelement (20, 21) in dem Kanal (13c, 14c) so angeordnet ist, dass ein beweglicher Teil desselben einer Führungsquerwand (22, 24) des Kanals gegenüberliegt, um einen mit demselben in Eingriff stehenden Gegenstand in einem Moment in Richtung der Führungsquerwand abzustoßen.

2. Vorrichtung nach Anspruch 1, **dadurch gekennzeichnet, dass** ein solches Ablenkelement (20, 21) aus einer mit einem äußersten Ende an dem Kanal (13c, 14c) befestigten flexiblen, elastischen Lamelle besteht, die im Inneren desselben nach unten einen Vorsprung in Richtung der Führungsquerwand in der Weise bildet, dass die Lamelle ein flexibles Hindernis in dem Kanal darstellt, welches in der Lage ist, beim Durchgang eines Gegenstandes elastisch zurückzuweichen, wobei sie ihn in Richtung der Führungsquerwand abstößt.

3. Vorrichtung nach Anspruch 1 oder 2, **dadurch gekennzeichnet, dass** der Führungskanal einen Kippsockel (13d, 14d) in der Nähe des Eingangs auf einer Höhe aufweist, die niedriger als die des Eingangs ist, welcher sich einem Teil der Oberfläche desselben gegenüberliegend erstreckt.

4. Vorrichtung nach Anspruch 3, **dadurch gekennzeichnet, dass** der Sockel (13d, 14d) auf der Seite der Führungsquerwand (22, 24) nach oben gekrümmt ist.

5. Vorrichtung nach einem der vorangegangenen Ansprüche, **dadurch gekennzeichnet, dass** ein solcher Führungskanal eine in der Austragsrichtung des Gegenstandes insgesamt gekrümmte Bodenwand (27) umfasst.

6. Vorrichtung nach Anspruch 5, **dadurch gekennzeichnet, dass** ein unterer Abschnitt der sich bis zu dem Ausgang erstreckenden Bodenwand praktisch die Form einer schiefen Ebene aufweist.

7. Vorrichtung nach Anspruch 5 oder 6, **dadurch gekennzeichnet, dass** die Bodenwand mit der Führungsquerwand durch einen Abschnitt mit gekrümmter Oberfläche (28) verbunden ist.

8. Vorrichtung nach einem der Ansprüche 1 bis 4, **dadurch gekennzeichnet, dass** ein solcher Führungskanal eine in der Austragsrichtung des Gegenstandes insgesamt geradlinige Bodenwand (29) umfasst.

9. Vorrichtung nach Anspruch 8, **dadurch gekennzeichnet, dass** die Bodenwand ein mit der Führungsquerwand durch einen Abschnitt mit gekrümmter Oberfläche verbundenes, stromaufwärts gelegenes Teilstück (30) und ein sich bis zu dem Ausgang erstreckendes, stromabwärts gelegenes Teilstück (32) in Form einer schiefen Ebene umfasst.

10. Vorrichtung nach einem der vorangegangenen Ansprüche, **dadurch gekennzeichnet, dass** sich die Breite des Kanals von oben nach unten vergrößert.

11. Vorrichtung nach einem der vorangegangenen Ansprüche, **dadurch gekennzeichnet, dass** sie mehrere der vorstehend aufgeführten Ablenkelemente (21, 23a, 23b) aufweist, die auf verschiedenen Höhen in dem Kanal entlang der Bahn eines Gegenstandes so angeordnet sind, dass sie den Gegenstand jedes Mal in Richtung der Führungsquerwand abstoßen.

12. Modul einer Rutsche zum Austragen von Gegenständen, **dadurch gekennzeichnet, dass** es mindestens zwei Vorrichtungen in Form von Rutschen (13, 14) nach einem der vorangegangenen Ansprüche aufweist, die Seite an Seite angeordnet sind, wobei ihre Eingänge (13a, 14a) jeweils mit dem oberen Teil des Moduls Seite an Seite und ihre Ausgänge jeweils auf verschiedenen Höhen übereinander angeordnet sind.

13. Modul nach Anspruch 12, **dadurch gekennzeichnet, dass** der zwischen einem Eingang und dem untersten Ausgang festgelegte Führungskanal so ausgestattet ist, dass er eine in der Austragsrichtung eines Gegenstandes insgesamt gekrümmte Bodenwand (27) umfasst.

14. Modul nach einem der Ansprüche 12 oder 13, **dadurch gekennzeichnet, dass** der zwischen einem Eingang und dem obersten Ausgang festgelegte Führungskanal so ausgestaltet ist, dass er eine in der Austragsrichtung eines Gegenstandes insgesamt geradlinige Bodenwand (29) umfasst.

15. Einrichtung zum Sortieren von Gegenständen, **dadurch gekennzeichnet, dass** sie eine Mehrzahl von Vorrichtungen in Form von Seite an Seite angeordneten Rutschen zum Austragen nach einem der Ansprüche 1 bis 11 aufweist.

16. Einrichtung zum Sortieren von Gegenständen, **dadurch gekennzeichnet, dass** sie eine Mehrzahl von Vorrichtungen in Form von Seite an Seite angeordneten Modulen von Rutschen zum Austragen nach einem der Ansprüche 12 bis 14 aufweist.

## Claims

1. Chute for evacuating objects distributed by a sorter conveyor, comprising an inlet defined by a substantially horizontal opening and a guide duct connecting said inlet to an outlet located at a lower level than said inlet, **characterised in that** at least one elastic deflector (20, 21) is located in said duct (13a, 14c) so that a mobile part of it faces a transverse guide wall (22, 24) of said duct in order to push an object engaged therein momentarily toward said transverse guide wall.

2. Chute according to claim 1, **characterised in that** said deflector (20, 21) consists of an elastic flexible blade fixed by one end to said duct (13c, 14c) and projecting downward inside said duct, toward said transverse guide wall so that said elastic blade constitutes a flexible obstacle in said duct adapted to retract elastically when an object passes it and to push said object toward said transverse guide wall.

3. Chute according to claim 1 or 2, **characterised in that** said guide duct has a turning base (13d, 14d) in the vicinity of said inlet, at a level lower than that of said inlet and facing a part of the surface thereof.

4. Chute according to claim 3, **characterised in that** said base (13d, 14d) is curved upward on the same side as said transverse guide wall (22, 24).

5. Chute according to any previous claims, **characterised in that** said guide duct has a back wall (27) which is globally curved in the direction of evacuation of said object.

6. Chute according to claim 5, **characterised in that** a lower portion of said back wall, extending to said outlet, is substantially in the form of an inclined plane.

7. Chute according to claim 5 or 6, **characterised in that** said back wall merges with said transverse guide wall via a curved surface portion (28).

8. Chute according to any claims 1 to 4, **characterised in that** said guide duct has a back wall (29) which is globally rectilinear in the direction of evacuation of said object.

9. Chute according to claim 8, **characterised in that** said back wall has an upstream section (30) merging with said transverse guide wall via a curved surface portion and a downstream section (32) in the form of an inclined plane extending to said outlet.

10. Chute according to any previous claims, **characterised in that** said duct widens in the upstream to downstream direction.

11. Chute according to any previous claims, **characterised in that** it comprises a plurality of said deflectors (21, 23a, 23b) disposed at different levels in said duct, along the travel of an object to push each time said object toward said transverse guide wall.

12. Chute module for evacuating objects, **characterised in that** it comprises at least two chutes (13, 14) as claimed in any previous claims, disposed side-by-side with their respective inlets (13a, 14a) located side-by-side in an upper part of said module and their respective outlets located at different levels, one above the other.

13. Module according to claim 12, **characterised in that** said guide duct defined between an inlet and the lowest outlet has a back wall (27) which is globally curved in the direction of evacuation of said object.

14. Module according to any claim 12 or 13, **characterised in that** said guide duct defined between an inlet and the highest outlet has an inclined back wall (29) which is globally rectilinear in the direction of evacuation of said object.

15. Installation for sorting objects, **characterised in that** it comprises a plurality of chutes according to any of claims 1 to 11, disposed side-by-side.

16. Installation for sorting objects, **characterised in that** it comprises a plurality of chute modules according to any of claims 12 to 14, disposed side-by-side.
